# EUROPEAN PATENT APPLICATION

(11) **EP 1 803 972 A1**
(43) Date of publication of application: **04.07.2007**
(21) Application number: 05425919.7
(22) Date of filing: 27.12.2005
(51) Int. Cl.: F16H 48/08

(54) **Differential assembly, in particular for motor vehicles**

(71) Applicant: ELASIS - Società Consortile per Azioni, 80038 Pomigliano d'Arco (IT)
(72) Inventor: di Martino, Alessandro, 80030 Pomigliano d'Arco (IT)
(74) Representative: Cerbaro, Elena

(57) **Abstract**

A differential assembly (1), in particular for motor vehicles, transmits the motion from an input shaft (4) to a pair of reciprocally counterposed coaxial output shafts (7) and is provided with a ring gear (11) rotably fed, in use, by the input shaft (4) about a rotation shaft (13); the assembly is also provided with a gear set (33) transmitting the motion from the ring gear (22) to the output shafts (7) and having a satellite gear carrier pin (36), whose axis (37) is orthogonal to the axis of rotation (13) of the ring gear (11); the satellite gear carrier pin (36) is turnable along with the ring gear (11) and is coupled to the ring gear (11) by means of a coupling device (41) made directly on the ring gear (11).

## Description

The present invention relates to a differential assembly, in particular for motor vehicles, adapted to transmit the motion from an input shaft to a pair of reciprocally counterposed, coaxial output shafts.

As known, in motor vehicles the differential assembly receives motion from a propeller shaft and transmits it to a pair of drive axles which rotably feed the drive wheels. Specifically, the differential assembly is arranged in an oil bath inside a fixed casing and comprises a supporting box, usually of cast iron, having two reciprocally opposite openings crossed by the ends of the two drive axles and carrying an outer ring gear in relative fixed position.

The ring gear has a toothing meshing with a pinion integral with the propeller shaft, thus defining a speed reduction ratio, for rotably feeding the supporting box about the axis defined by the two drive axles.

The supporting box accommodates a planetary gear set comprising a pair of satellite gears, a pair of planetary gears meshing with the satellite gears and a satellite gear carrier pin, whose ends are coupled to respective anchoring portions of the supporting box.

The satellite gear carrier pin extends in a direction orthogonal to the drive axles, turns along with the supporting box, while each of the planetary gears is splined, in a fixed angular position, onto the end of a respective drive axle to rotationally feed it.

The differentials of the known type described above are poorly satisfactory because they are heavy and relatively large.

The above drawback is essentially due to the weight and dimensions of the differential assembly supporting box, which must indeed be designed so as to have a structural function, i.e. a carrying function, because, in use, it absorbs the meshing loads received by the outer ring gear from the propeller shaft, transfers the motive torque from the outer ring gear to the satellite gear carrier pin, and absorbs the loads deriving from meshing the gear set contained inside.

In other words, in order to withstand the stresses deriving from torque transmission and meshing loads, the dimensions, the material and the shape of the supporting box must be appropriately designed, thus influencing the overall weight and dimensions of the differential assembly.

Specifically, the design of the anchoring portions to which the satellite gear carrier pin is coupled is particularly critical, because the stresses are higher exactly at such anchoring portions.

It is the object of the present invention to achieve a differential assembly, in particular for motor vehicles, allowing to simply and cost-effectively solve the problems explained above and, preferably, having features so as to be easily assembled.

According to the present invention, a differential assembly, in particular for motor vehicles, for transmitting the motion from an input shaft to a pair of reciprocally counterposed coaxial output shafts is obtained; the assembly comprising:
- a ring gear adapted to be rotably fed by said input shaft about its axis;
- a gear set for transmitting the motion of said ring gear to said output shafts; the gear set comprising a satellite gear carrier pin having an axis orthogonal to the axis of rotation of the ring gear and rotable along with said ring gear about said rotation axis;
characterised in that said ring gear comprises coupling means of said satellite gear carrier pin.

Preferably, said coupling means comprise a pair of reciprocally aligned seats engaged by the ends of said satellite gear carrier pin.

Preferably, the differential assembly comprises a box accommodating said gear set.

Conveniently, said box comprises at least a withholding portion for maintaining said satellite gear carrier pin coupled to said ring gear.

Preferably, the ends of said satellite gear carrier pin are withheld in position, along a direction parallel to said axis of rotation, by two half shells of said box.

Conveniently, said ring gear comprises, for each half shell, a respective axial centring ridge.

For a better understanding of the present invention, it will now be described a preferred embodiment only by way of non-limitative example, and with reference to the accompanying drawings, in which:
- figure 1 shows in prospective a preferred embodiment of the differential assembly, in particular for motor vehicles, according to the present invention;
- figure 2 shows, in perspective, a detail of the differential assembly in figure 1; and
- figure 3 is a cross section of the differential assembly in figure 1.

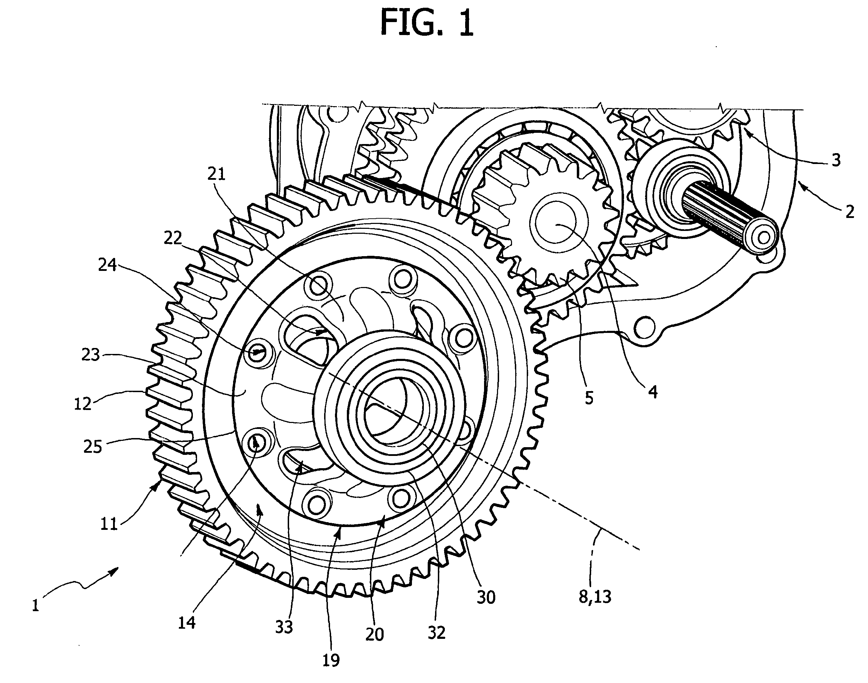

In figure 1, it is indicated by 1 a differential assembly constituting part of a transmission assembly 2 of a motor vehicle (partially shown). Specifically, the transmission assembly 2 comprises a gearbox 3, whose output shaft 4 carries a splined pinion 5 at its end.

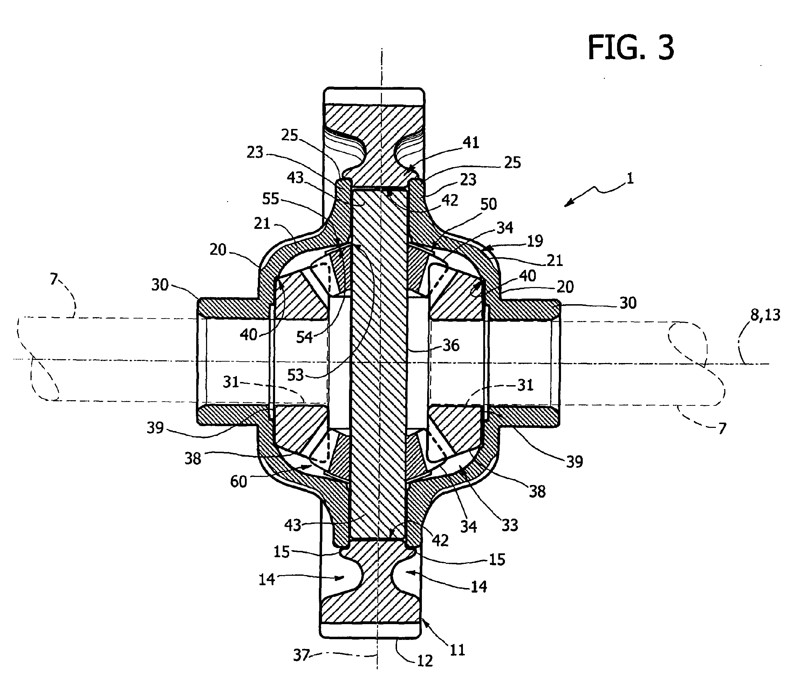

The assembly 1 transmits the motion from the pinion 5 to a pair of counterposed drive axles 7 (schematically shown by a broken line in figure 3), which extend coaxially together along an axis 8.

The assembly 1 is accommodated in a supporting casing (not shown) and comprises a ring gear 11 which is made of steel and has, on its outer periphery, a toothing 12 meshing with the pinion 5 and defined, in the particular example described, by a cylindrical straight toothing.

The ring gear 11 is turnable about its axis 13 coinciding with axis 8, as it will be better explained in detail below, and has respective circular axial centring ridges 15 on its side faces 14.

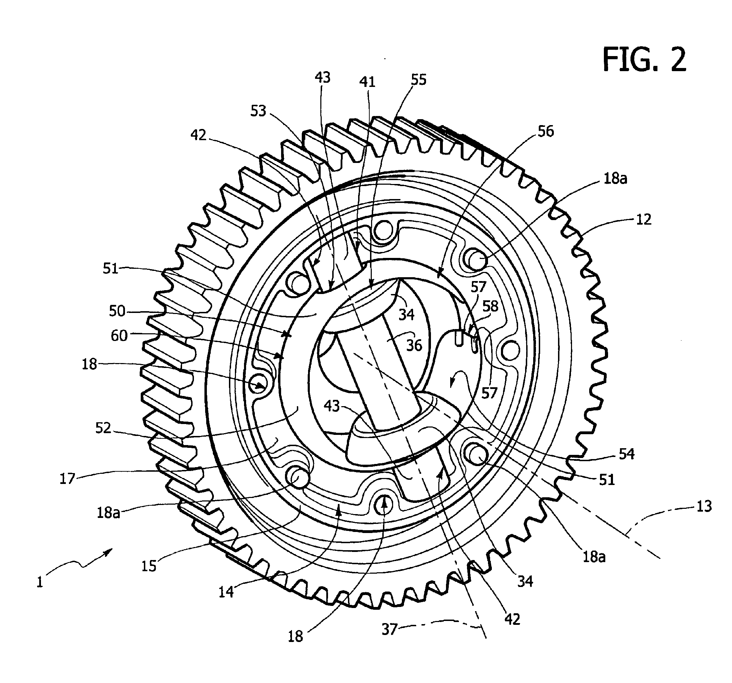

With reference to figure 2, the ridges 15 radially delimit an inner annular portion 17 having a plurality of holes 18 parallel to the axis 13 and angularly reciprocally distanced for fixing a protection box 19.

Some of the holes 18 may eventually be engaged by a protruding reference dowel 18a for angularly positioning the box 19.

The box 19 comprises two half shells 20, each fastened to the holes 18 of a respective face 14 by means of screws or other fastening members (not shown).

Each half shell 20 comprises a housing 21, having a plurality of openings 22 for the passage of oil and radially outwardly ending with an annular flange 23 abuttingly arranged against the portion 17.

The flange 23 has, in turn, a plurality of holes 24 aligned with the holes 18 for fastening said fastening members, and an outer circular edge 25 surrounded by the ridge 15.

Each half shell 20 further comprises a respective cylindrical shank 30, which extends from the respective housing 21 along the axis 13 in a direction opposite to the ring gear 11 and is axially hollow to allow the passage with clearance of the end 31 of a respective drive axle 7 (figure 3).

The outer cylindrical surfaces of the shanks 30 carry respective bearings 32, which maintain the assembly 1 coupled to said supporting casing and allow the ring gear 11 and the box 19 to turn about the axis 13.

With reference to figures 2 and 3, the box 19 accommodates a planetary gear set 33 comprising a pair of satellite gears 34, whose toothing is not shown in figure 2. The satellite gears 34 are carried by a pin 36, whose axis 37 is orthogonal to axis 13.

The satellite gears 34 are coaxial to each other and to the pin 36 itself so as to turn with respect to the ring gear 11 about axis 37.

With reference to figure 3, the gear set 33 also comprises a pair of planetary gears 38, which are reciprocally coaxial along axis 8, are interposed between the satellite gears 34, mesh with the satellite gears 34 themselves, and are each splined in fixed angular position onto a respective end 31.

Specifically, the planetary gears 38 comprise respective bases 39, which rotationally engage about axis 8 respective centring and guiding seats 40 made in the half shells 20.

According to the invention, the ring gear 11 comprises a coupling device 41 for the pin 36, so as to transmit the motive torque to the pin 36 itself without the motive torque being transferred to the box 19.

The device 41 comprises two seats 42 made along the axis 37 in the portion 17 in reciprocally diametrically opposite positions with respect to the axis 13 and each engaged by a respective end 43 of the pin 36.

Specifically, the pin 36 may be rotationally coupled to the portion 17 about axis 37, for example by radial clearance or by interposing sleeve or ball bearings (not shown); alternatively, it may be fixedly coupled thus leaving only the satellite gears 34 free to rotate about the axis 37.

In the particular example described above, the seats 42 cross the portion 17 in a direction parallel to axis 13 and are delimited and closed, along such direction, by flanges 23. Therefore, the fins 23 act as shoulder for withholding the ends 43 of the pin 37 in engagement with the seats 42 in a direction parallel to the axis 13 (figure 3).

In the particular example described, the pin 36 is coupled to the ring gear 11 so as to have a clearance, for example equal to a tenth of a millimetre, in a direction parallel to the axis 13: in such way, the position of the pin 36 may settle or adjust itself automatically with respect to the ring gear 11 in use and compensate for possible machining inaccuracies in couplings and/or alignments.

The position of the satellite gears 34 is also automatically adjusted in use. For this purpose, a C-shaped elastic member 50 essentially coaxial with the ring gear 11 is interposed between the satellite gears 34 and the portion 17 of the ring gear 11.

The elastic member 50 comprises two portions 51 which are joined together by an intermediate portion 52, are provided with respective slots 53 crossed by the pin 36, with clearance in the circumferential direction with respect to the axis 13, and have an inner surface 54 abuttingly arranged against the base surfaces 55 of the satellite gears 34. Specifically, the elastic member 50 has a C-shaped cross section: in other words, the inner surface 54 is concave towards the axis 13, so that the surfaces 54 and 55 are essentially and reciprocally complementary.

The elastic member 50 has an outer surface 56 which faces portion 17 in radial direction with respect to axis 13. Two pairs of teeth 57 protrude in a direction opposite to the axis 13 from surface 56. The teeth 57 reciprocally define, in a direction parallel to axis 13, a seat 58 which is engaged by the portion 17. Specifically, the coupling between the teeth 57 and the edges of the portion 17 allows to position and withhold the elastic member 50 during the assembly of the assembly 1, along with the pin 36 and the satellite gears 34, in a fixed axial position.

Indeed, the pin 36, the satellite gears 34 and the elastic member 50 define an assembly 60 which can be pre-assembled before being coupled to the ring gear 11 during assembly.

Specifically, to assemble the assembly 60 it is sufficient to abuttingly arrange the bases of the satellite gears 34 on the inner surface 54, aligning the holes of the satellites 34 (not shown in the attached figures) with the respective slots 53, and then inserting the pin 36 along the axis 37 through the slots 53 and such holes.

After being pre-assembled, the assembly 60 is coupled to the portion 17 of the ring gear 11, by inserting the ends 43 of the pin 36 into the seats 42 in a direction parallel to axis 13 and by inserting portion 17 in the seat 58 defined by the elastic member 50, making the two teeth 57 snap on opposite sides of the portion 17 itself. In this condition, the assembly 60 remains provisionally stationary with respect to the ring gear 11.

Then, the planetary gears 38 are coupled to the satellite gears 34 and the half shells 20 are fastened to the faces 14 of the ring gear 11, so as to enclose the gear set 33 and to stably maintain the pin 36 engaged in the seats 42 and the planetary gears 38 meshed to the satellite gears 34.

In use, the motive torque about the axis 13 is transferred from the ring gear 11 directly to the pin 36, without concerning the box 19, thanks to the fact that the device 41 is made on the ring gear 11 and not on the box 19. Specifically, the ring gear 11 has a different geometry with respect to the known solutions to house the ends 43 of the pin 36 and to thus transmit the motive force.

Thanks to such feature, it is possible to obtain a box 19 lighter than the known solutions having a carrying function and being made of cast iron, for example, by using lighter materials such as aluminium and/or by making less bulky shapes and geometries.

The assembly 1 is then, in practice, self-adjusted thanks to the elastic member 50 and to the fact that the pin 36 engages the seats 43 which slight clearance, whereby being positioned automatically with respect to the ring gear 11.

The gear set 33 is then suitably protected by the box 19, however remaining lubricated by the oil which is contained in the support casing of the assembly 1 and flows through the openings 22.

The assembly of the assembly 1 is then extremely simple because a portion of the box 19, i.e. the flanges 23, stably maintains the pin 36 in a fixed position, without the need for additional components.

Furthermore, it is relatively simple to carry out the seats 42, because these are through in a direction parallel to the axis 13, and are not blank; and to withhold the pin 36 engaged in the seats 42 themselves, thanks to the half shells 20 reciprocally equal and symmetrically arranged on opposite parts of the ring gear 11 and the pin 36.

The assembly of the half shells 20 is relatively simple thanks to the fact that the ridges 15 act as references for precisely and rapidly positioning the edges 25, coaxially to the ring gear 11.

It is finally apparent that changes and variations can be made to the assembly 1 here described and illustrated without departing from the scope of protection of the present invention, as defined in the accompanying claims.

Specifically, different materials may be used for the various components with respect to those shown by way of example and/or the device 41 may be different from that described with reference to the attached figures. For example, the seats 42 could be blank in a direction parallel to axis 13 and/or the pin 36 may be coupled to the ring gear 11 by means of an elastically yielding coupling device, for example to obtain a snapping assembly of the pin 36 or to allow an automatic adjustment of the position of the pin 36 with respect to the ring gear 11, without needing to envisage clearance and, therefore, without causing shocks during operation.

Furthermore, the half shells of the box 19 may be fixed to the ring gear in a different way with respect to the coupling by means of screws, for example by welding.

## Claims

1. A differential assembly (1), in particular for motor vehicles, for transmitting the motion from an input shaft (4) to a pair of reciprocally counterposed coaxial output shafts (7); the assembly comprising:
- a ring gear (11) adapted to be rotably fed by said input shaft (4) about its axis (13);
- a gear set (33) for transmitting the motion from said ring gear (22) to said output shafts (7); the gear set comprising a satellite gear carrier pin (36) having an axis (37) orthogonal to the axis of rotation (13) of said ring gear (11) and turnable along with said ring gear (11) about said rotation axis (13);
**characterised in that** said ring gear (11) comprises coupling means (41) of said satellite gear carrier pin (36).

2. A differential assembly according to claim 1, **characterised in that** said coupling means (41) comprise a pair of seats (42) reciprocally aligned and engaged by the ends (43) of said satellite gear carrier pin (36).

3. A differential assembly according to claim 1 or 2, **characterised in that** said satellite gear carrier pin (36) is coupled in a fixed position to said ring gear (11).

4. A differential assembly according to claim 1 or 2, **characterised in that** said satellite gear carrier pin (36) is coupled to said ring gear (11) rotationally about its axis (37).

5. A differential assembly according to claim 4, **characterised in that** said satellite gear carrier pin (36) is coupled to said ring gear (11) by means of bearings.

6. A differential assembly according to any of the claims from 1 to 4, **characterised in that** said satellite gear carrier pin (36) is coupled with clearance to said ring gear (11).

7. A differential assembly according to claim 6, **characterised in that** said clearance is obtained in a direction parallel to the axis of rotation (13) of said ring gear (11).

8. A differential assembly according to any of the preceding claims, **characterised in that** it comprises a box (19) housing said gear set (33) and turnable along with said ring gear (11) about said rotation axis (13).

9. A differential assembly according to claim 8, **characterised in that** said box (19) comprises at least one withholding portion (23) for maintaining said satellite gear carrier pin (36) coupled to said ring gear (11).

10. A differential assembly according to claim 8 or 9, **characterised in that** said box (19) comprises a pair of half shells (20) arranged on opposite sides of said ring gear (11) and fastened to said ring gear (11).

11. A differential assembly according to claim 10, **characterised in that** the ends (43) of said satellite gear carrier pin (36) are withheld in position, along a direction parallel to said axis of rotation (13), by both said half shells (20).

12. A differential assembly according to claim 10 or 11, **characterised in that** said ring gear (11) comprises reference means (15) for positioning said half shells (20) .

13. A differential assembly according to claim 12, **characterised in that** said reference means comprise a respective axial centring ridge (15) for each of said half shells (20).
